# EUROPEAN PATENT APPLICATION

(11) **EP 1 612 245 A1**
(43) Date of publication of application: **04.01.2006**
(21) Application number: 04723342.4
(22) Date of filing: 25.03.2004
(51) Int. Cl.: C08L 101/00, C08L 79/04

(54) **RESIN COMPOSITION AND TRANSPARENT FORMED ARTICLE**

(30) Priority: 26.03.2003 JP 2003086295
(71) Applicant: ZEON CORPORATION, Tokyo 100-8246 (JP)
(72) Inventor: SAWAGUCHI, Taichi, ZEON CORPORATION, Tokyo 1008323 (JP)
(74) Representative: Vossius & Partner
(86) International application number: PCT/JP2004/004146
(87) International publication number: WO 2004/085538

(57) **Abstract**

A transparent shaped article comprised of a resin composition containing an alicyclic structure-containing polymer and a hindered amine compound, the hindered amine compound having (1) a 400 nm light transmittance measured by a 10 mm light path cell in a 5 wt% chloroform solution of 90% or more and (2) a molecular weight of 1500 or more. According to the present invention, it is possible to provide a transparent shaped article free from ablation and clouding of the surface of the shaped article upon exposure by short wavelength light such as that of a blue laser of a wavelength of 350 nm to 530 nm and able to keep stable transparency against exposure of short wavelength light such as that of a blue laser.

## Description

### TECHNICAL FIELD OF THE INVENTION

The present invention relates to a resin composition and transparent shaped article, more particularly relates to a resin composition containing an alicyclic structure-containing polymer and hindered amine compound and a transparent shaped article able to keep a good transparency against exposure by a blue laser.

### BACKGROUND ART

At the present time, as optical recording media, organic dye type optical recording media able to be recorded on and reproduced from at a high density using red semiconductor laser light (DVD-R) are being commercialized. Such optical recording media normally are comprised of a resin substrate transparent to a laser beam on the surface of which at least a recording layer and a metal reflection layer are stacked.

As one resin excellent in transparency, an alicyclic structure-containing polymer is known. This alicyclic structure-containing polymer is being used for production of not only optical recording media, but also optical lenses, prisms, light guide panels, and other optical components. The transparency sought from optical components has been rising year by year. Further, environmental stability enabling the transparency to be kept even under high temperature, high humidity, exposure to light, and other adverse conditions is being sought. To meet these demands, the technology of adding to an alicyclic structure-containing polymer a phosphorus compound, hindered amine compound, hindered phenol compound, or other light stabilizer has been proposed (see Patent Documents 1 to 3).

In recent years, short wavelength emission semiconductor lasers (blue lasers with wavelengths of 350 nm to 530 nm) have been developed. As shorter wavelength laser emission becomes possible, studies are being conducted for making optical recording media even higher in density. Therefore, optical recording media able to be recorded on and reproduced from by a shorter wavelength laser are being sought.

Using the related art, the inventor used resin compositions obtained by blending the light stabilizers described in Patent Documents 1 to 3 in alicyclic structure-containing polymers to produce transparent shaped articles, whereupon they learned that by exposure of a large amount of short wavelength light such as that of a blue laser of a wavelength of 350 nm to 530 nm, even with a short exposure time, the surface of the shaped article sometimes suffers from ablation (lifting of the surface of the shaped article) . Further, they learned that if reducing the amount of exposure and lengthening the exposure time, the shaped article sometimes becomes clouded.
Patent Document 1 : Japanese Patent Publication (A) No. 7-216152
Patent Document 2: Japanese Patent Publication (A) No. 9-268250
Patent Document 3: Japanese Patent Publication (A) No. 2001-139756

### DISCLOSURE OF THE INVENTION

An object of the present invention is to provide a resin composition suitable for forming a transparent shaped article able to keep stable transparency against exposure of short wavelength light such as that of a blue laser of a wavelength of 350 nm to 530 nm and a transparent shaped article comprised of that resin composition.

The inventor discovered that if using a hindered amine compound having a specific light transmittance and molecular weight, it is possible to keep a stable transparency against exposure of short wavelength light such as that of a blue laser and thereby completed the present invention.

That is, according to the present invention, there is provided
a resin composition containing an alicyclic structure-containing polymer and hindered amine compound, wherein the hindered amine compound has (1) a 400 nm light transmittance measured by a 10 mm light path cell in a 5 wt% chloroform solution of 90% or more and (2) a molecular weight of 1500 or more.

Preferably, the hindered amine compound is a polymer.
Preferably, the polymer is poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imine}].
Preferably, the content of the hindered amine compound is 0.01 to 1.5 parts by weight with respect to 100 parts by weight of the alicyclic structure-containing polymer.
Preferably, the composition contains another polymer ingredient with a metal content of 50 ppm or less, the content of the other polymer ingredient being 0.05 to 70 parts by weight with respect to 100 parts by weight of the alicyclic structure-containing polymer.

According to the present invention, there is provided a transparent shaped article comprised of any of the above resin compositions.
The transparent shaped article according to the present invention is preferably used for an apparatus using a blue laser.

### BEST MODE FOR WORKING THE INVENTION

### Resin Composition

The resin composition according to the present invention contains an alicyclic structure-containing polymer and hindered amine compound.

### Alicyclic Structure-Containing Polymer

The alicyclic structure-containing polymer used in the present invention preferably has an alicyclic structure at its main chain and/or side chains and, from the viewpoint of the mechanical strength, heat resistance, etc., contains an alicyclic structure at the main chain.
As the alicyclic structure of the polymer, a saturated cyclic hydrocarbon (cycloalkane) structure, unsaturated cyclic hydrocarbon (cycloalkene) structure, etc. may be mentioned. The number of carbon atoms forming the alicyclic structure is not particularly limited, but normally is 4 to 30, preferably 5 to 20, more preferably 5 to 15 in range. When in this range, the mechanical strength, heat resistance, and shapeability are balanced to a high degree and suitable.

The ratio of the recurring units having an alicyclic structure in the alicyclic structure-containing polymer may be suitably selected in accordance with the object of use. It is preferably 50 wt% or more, more preferably 70 wt% or more, particularly preferably 90 wt% or more.
The remainder other than the recurring units having the alicyclic structure in the alicyclic structure-containing polymer is suitably selected in accordance with the object of use.
As the alicyclic structure-containing polymer, a norbornene-based polymer, monocyclic cycloalkene-based polymer, vinylcycloalkane-based polymer, etc. may be mentioned.

A norbornene-based polymer is a polymer obtained by addition (co)polymerization or ring-opening (co)polymerization of a norbornene-based monomer and, in accordance with need, hydrogenation of the unsaturated bond parts.
A monocyclic cycloalkene polymer is a polymer obtained by addition (co)polymerization of a monocyclic cycloalkene monomer or alicyclic conjugated diene monomer and, in accordance with need, hydrogenation of the unsaturated bond parts.

The vinylcycloalkane-based polymer is a vinylcycloalkane polymer; a hydrogenate of the unsaturated bond part of a copolymer with a vinylcycloalkene polymer or other monomer copolymerizable with vinylcycloalkane or vinylcycloalkene; or a hydrogenate of the aromatic ring and olefinic unsaturated bond part of a copolymer with another monomer copolymerizable with an aromatic vinyl-based polymer or aromatic vinyl compound.
Among these, a ring-opening (co)polymer of a norbornene-based monomer and its hydrogenate are preferable.

Note that, in the following explanation, a norbornene-based monomer, monocyclic cycloalkene, alicyclic conjugated diene, and vinylcycloalkene are sometimes referred to as an "alicyclic structure-containing monomer".

As the alicyclic structure-containing monomer, a norbornene-based monomer, monocyclic cycloalkene, alicyclic conjugated diene, vinyl alicyclic hydrocarbon, etc. may be mentioned.
As the norbornene-based monomer, bicyclo[2.2.1]-hept-2-ene (common name: norbornene) and its derivatives, tricyclo [4.3.0.1^{2,5}] dec-3, 7-diene (common name: dicyclopentadiene), tricyclo [4.3.0.12,5] dec-3-ene, tricyclo[4.4.0.1^{2,5}]undec-3,7-diene, tricyclo [4.4.0.1^{2,5}]undec-3,8-diene, tricyclo[4.4.0.1^{2,5}] undec-3-ene, 7,8-benzotricyclo[4.3.0.1^{2,5}]dec-3-ene (other name: 1,4-methano-1,4,4a,9a-tetrahydrofluorene), tetracyclo [8.4.0.^{11,14}.0^{2,8}]tetradec-3,5,7,12-11-tetraene ( other name: 1,4-methano-1,4,4a,5,10,10a-hexahydroanthracene), tetracyclo[4. 4.0.1^{2,5}.1^{7,10}] dodec-3-ene (common name: tetracyclododecene), and their derivatives etc. may be mentioned.
Among these, tricyclo[4.3.0.1^{2,5}]dec-3,7-diene (common name: dicyclopentadiene), 7,8-benzotriayclo [4.3.0.1^{2,5}]dec-3-ene (other name: 1, 4-methano-1, 4, 4a, 9a-tetrahydrofluorene), tetracyclo[4 .4. 0.1^{2,5}.1^{7,10}] dodec-3-ene (common name: tetracyclododecene), and their derivatives are preferable.

As the monocyclic cycloalkene, cyclobutene, cyclopentene, cyclohexene, 3,4-dimethylcyclopentene, etc. may be mentioned.
As the alicyclic conjugated diene, cyclopentadiene, cyclohexadiene, etc. may be mentioned.
As the vinyl alicyclic hydrocarbon, vinylcycloalkene and vinylcycloalkane may be mentioned. As the vinylcycloalkene, vinylcyclopentene, 2-methyl-4-vinylcyclopentene, vinylcyclohexene, etc. may be mentioned. As the vinylcycloalkane, vinylcyclopentane, 2-methyl-4-vinylcyclopentane, vinylcyclohexane, vinylcycloctane, etc. may be mentioned.

As the aromatic vinyl compound, styrene, α-methylstyrene, divinylbenzene, vinylnaphthalene, vinyltoluene, etc. may be mentioned.
The above alicyclic structure-containing monomer and aromatic vinyl compound may be used alone or in combinations of two or more types.

The alicyclic structure-containing polymer used in the present invention may also be obtained by copolymerization of the alicyclic structure-containing monomer and/or aromatic vinyl compound and another monomer able to be copolymerized with the alicyclic structure-containing monomer or aromatic vinyl compound.
As the other monomer able to be copolymerized with the alicyclic structure-containing monomer or aromatic vinyl compound, ethylene, propylene, 1-butene, 1-pentene, 1-hexene, 3-methyl-1-butene, 3-methyl-1-pentene, or other chain-like olefin; 1,4-hexadiene, 4-methyl-1,4-hexadiene, 5-methyl- 1,4-hexadiene, 1,7-octadiene, or other nonconjugated diene, etc. may be mentioned. These monomers may be used alone or in combination of two or more types.

The alicyclic structure-containing polymer used in the present invention may also contain a polar group. As a polar group, a hydroxyl group, carboxyl group, alkoxyl group, epoxy group, glycidyl group, oxycarbonyl group, carbonyl group, amide group, ester group, acid anhydride group, etc. may be mentioned.

The polymerization method of the alicyclic structure-containing polymer and the method of hydrogenation performed in accordance with need are not particularly limited and may be known methods.

The ring opening polymerization of the norbornene-based monomer and monocyclic cycloalkene is performed using as a ring opening polymerization catalyst a halide, nitrate, or acetyl acetone compound of ruthenium, palladium, osmium, platinum, or another metal, a catalyst comprised of a reducing agent, or a halide or acetyl acetone compound of titanium, vanadium, zirconium, tungsten, molybdenum, or another metal, or catalyst comprised of an organic aluminum compound of a co-catalyst, normally in a solvent at a temperature of -50°C to 100°C and a pressure of 0 to 5 MPa.

The addition polymerization of the norbornene-based monomer and monocyclic cycloalkene or the addition polymerization with a monomer copolymerizable with the same is performed, for example, by polymerization of the monomer ingredient in the present of a titanium, zirconium, or vanadium compound and the co-catalyst organic aluminum compound normally at a temperature of -50°C to 100°C and a pressure of 0 to 5 MPa.

The polymerization reaction of an aromatic vinyl compound, vinylcycloalkene, or vinylcycloalkane may be performed by radical polymerization, anionic polymerization, cationic polymerization, or another known-method, but with cationic polymerization, the molecular weight of the polymer becomes small, while with radical polymerization, the molecular weight distribution becomes broad and the mechanical strength of the shaped article tends to become poor, so anionic polymerization is preferable. Further, suspension polymerization, solution polymerization, or bulk polymerization is also possible. Among these polymers, an aromatic vinyl compound homopolymer or a hydrogenate of a random and block copolymer having at least 50 wt% of aromatic vinyl compound units is preferable. The hydrogenated styrene homopolymer may be isotactic, syndiotactic, or atactic.

The anionic polymerization of the aromatic vinyl compound, vinylcycloalkene, or vinylcycloalkane is specifically performed in an organic solvent using n-butyl lithium, 1,4-dilithiobutane, or another organic alkali metal as a polymerization catalyst. For the purpose of securing the mechanical strength, heat resistance, etc., to obtain a polymer with a narrow molecular weight distribution, dibutylether, triethylamine, or another Lewis base is added.
The above organic solvent is preferably a hydrocarbon-based solvent, for example, n-pentane, n-hexane, isooctane, and other aliphatic hydrocarbons; cyclopentane, cyclohexane, and other alicyclic hydrocarbons; benzene, toluene, and other aromatic hydrocarbons; tetrahydrofuran, dioxane, and other ethers, etc. may be mentioned. The amount of use of the organic solvent is an amount giving a monomer concentration of normally 1 to 40 wt%, preferably 10 to 30 wt%.

The anionic polymerization reaction is a reaction normally conducted at -70 to 150°C, preferably -50 to 120°C, for normally 0.01 to 20 hours, preferably 0.1 to 10 hours.

The alicyclic conjugated diene may be polymerized by the known method described for example in Japanese Patent Publication (A) No. 6-136057 or Japanese Patent Publication (A) No. 7-258318.

The polymerization conversion rate of the alicyclic structure-containing polymer is normally 95 wt% or more, preferably 97 wt% or more, more preferably 99 wt% or more. By making the polymerization conversion rate higher, a shaped article with little discharged organic matter is obtained.

With the alicyclic structure-containing polymer, by hydrogenating the ring or main chain and side chain carbon-carbon unsaturated bonds after the polymerization reaction, the amount of discharged organic matter of the obtained shaped article becomes smaller. The ratio of the number of carbon-carbon double bonds with respect to the number of all carbon-carbon bonds in the hydrogenated alicyclic structure-containing polymer is normally 0.15 wt% or less, preferably 0.07 wt% or less, more preferably 0.02 wt% or less. The smaller the ratio of double bonds, the less the amount of discharged organic matter of the shaped article.

For the hydrogenation reaction, the reaction temperature, hydrogen partial pressure, reaction time, and reaction solution concentration are set to the optimum ranges according to the type of the polymer hydrogenated. In the hydrogenation reaction, the hydrogenation catalyst is used in an amount of 0.01 to 50 parts by weight with respect to 100 parts by weight of the polymer and the reaction is performed at a reaction temperature of 25 to 300°C and hydrogen partial pressure of 0.5 to 10 MPa in a reaction time of 0.5 to 20 hours.

As the hydrogenation catalyst, for example, a homogeneous catalyst comprised of a nickel, cobalt, or other metal compound and organic aluminum or organic lithium in combination is preferable. In accordance with need, activated charcoal, diatomaceous earth, magnesia, or another carrier is used. The amount of use of the hydrogenation catalyst is the amount giving a catalyst ingredient of normally 0.03 to 50 parts by weight with respect to 100 parts by weight of the polymer for hydrogenation.

The hydrogenated alicyclic structure-containing polymer is obtained by removing the hydrogenation catalyst by filtering the hydrogenation reaction solution, and then by removing the solvent etc. from the filtered solution. As the method for removing the solvent etc., the coagulation method, the direct drying method, etc. may be mentioned.

The coagulation method is the method of mixing the polymer solution with a poor solvent of the polymer to cause the polymer to precipitate. As the poor solvent, for example, ethyl alcohol, n-propyl alcohol, isopropyl alcohol, or another alcohol; acetone, methylethylketone, or another ketone; ethyl acetate, butyl acetate, or another ester or another polar solvent can be mentioned. After coagulation and separation of the solids and liquids, the polymer crumbs are dried by heating to remove the solvent.
The direct drying method is the method of heating the polymer solution under reduced pressure to remove the solvent. This method may be performed by using a centrifugal thin film continuous evaporation dryer, a surface scrape heat exchange type continuous reactor type dryer, a high viscosity reactor device, or other known device. The vacuum degree and temperature may be suitably selected in accordance with the apparatus.

To obtain a shaped article with little volatile ingredients such as the amount of discharged moisture and amount of discharged organic matter, the content of the volatile ingredients of the polymer is preferably made 0.5 wt% or less. Here, the content of volatile ingredients is the amount of ingredients volatilizing when heated from 30°C to 350°C at 10°C/min using a differential thermal analyzer (Seiko Instruments, "TG/DTA200") . The method of reducing the volatile ingredients is not particularly limited, but for example, the method of using the above-mentioned coagulation method or direct drying method to remove the other discharged moisture and discharged organic matter from the polymer solution simultaneously with the solvent and also the method using steam stripping, vacuum stripping, nitrogen stripping, etc. may be mentioned. In particular, the coagulation method and direct drying method are excellent in productivity and therefore preferred.

The alicyclic structure-containing polymer is stripped of solvent by coagulation or direct drying, then heated under reduced pressure for drying, whereby a shaped article with a small amount of discharged moisture or amount of discharged organic matter is obtained. The pressure at the time of drying is normally 10 kPa or less, preferably 3 kPa or less, while the heating temperature is normally 260°C or more, preferably 280°C or more.

The alicyclic structure-containing polymer used in the present invention has a glass transition temperature (hereinafter referred to as "Tg" in some cases; with a block copolymer, the Tg indicating the higher of the two or more values) of normally 60 to 200°C, preferably 70 to 180°C, particularly preferably 90 to 160°C. If the Tg is too low, the heat resistance tends to become poor. If the Tg is too high, the workability tends to become poor. Here, the Tg is the value measured using a differential scan calorimeter.

The molecular weight of the alicyclic structure-containing polymer is not particularly limited, but when the polymer used in the present invention is a block copolymer, the weight average molecular weight (Mw) of the block copolymer is 50, 000 to 300, 000, preferably 55, 000 to 200, 000, particularly preferably 60,000 to 150,000. When a random copolymer or homopolymer, the weight average molecular weight (Mw) is normally 5,000 to 500, 000, preferably 10,000 to 200,000. If the Mw is too small, the mechanical strength is no longer sufficient, while if too large, the shaping time becomes long, heat decomposition of the polymer easily occurs, and the amount of discharged organic matter tends to increase.
The alicyclic structure-containing polymer has a molecular weight distribution, expressed by the ratio of the weight average molecular weight (Mw) and number average molecular weight (Mn) (Mw/Mn), of normally 2.0 or less, preferably 1.5 or less, more preferably 1.2 or less. If the Mw/Mn is in this range, the mechanical strength and heat resistance are balanced to a high degree.

### Hindered Amine Compound

In the present invention, a specific hindered amine compound is used. This hindered amine compound has (1) a 400 nm light transmittance measured by a 10 mm light path cell in a 5 wt% chloroform solution (below, simply referred to as the "light transmittance") of 90% or more and (2) a molecular weight of 1500 or more, preferably 1,500 to 10,000, more preferably 1,500 to 5,000. By using a specific hindered amine compound with a light transmittance and molecular weight in the above ranges, a good transparency with respect to blue laser light is stably obtained.
Further, when the hindered amine compound is a polymer, the "molecular weight" means the number average molecular weight measured by gel permeation chromatography using tetrahydrofuran as a solvent.

The preferable hindered amine compound used in the present invention is the compound containing a plurality of piperidine rings with substituents bonded to both the two carbon atoms adjoining the nitrogen atom, particularly preferably, as the substituent bonded with the carbon atoms adjoining the nitrogen atom, a methyl group, ethyl group, or other alkyl group, most preferably a methyl group bonded to the two carbon atoms.

As examples of the hindered amine compound, N,N',N",N"'-tetrakis-(4,6-bis(butyl-(N-methyl-2,2,6,6-tetramethylpiperidine-4-yl)amino)-triazine-2-yl)-4,7-diazadecan-1,10-amine, a polymerization condensate of dibutylamine, 1, 3, 5-triazine, and N,N'-bis (2, 2, 6, 6-tetramethyl-4-piperidyl)butylamine, poly[{6-(1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}], a polymerization condensate of 1,6-hexanediamine-N,N'- bis(2,2,6,6-tetramethyl-4-piperidyl) and morpholine-2,4,6-trichloro-1,3,5-triazine, poly[(6-morpholino-s-triazine-2,4-diyl) [(2,2,6,6-tetramethyl-4-piperidyl)imino]-hexamethylene [(2,2,6,6-tetramethyl-4-piperidyl)imino], and other high molecular weight hindered amine compounds with a plurality of piperidine rings bonded through a triazine skeleton;

a condensate of dimethyl succinate and 4-hydroxy-2,2,6,6-tetramethyl-1-piperidineethanol, a mixed esterified product of 1,2,3,4-butane tetracarboxylic acid, 1,2,2,6,6- pentamethyl-4-piperidinol, and 3,9-bis(2-hydroxy-1,1-dimethylethyl)-2,4,8,10-tetraoxaspiro[5,5]undecane, and other high molecular weight hindered amine compounds with a plurality of piperidine rings bonded through ester bonds; etc. may be mentioned.
Among these, the particularly preferred hindered amine compound is poly[{6-(1,1,3,3-tetramethylbutyl)amino-1,3,5-triazine-2,4-diyl}{(2,2,6,6-tetramethyl-4-piperidyl) imino}hexamethylene {(2,2,6,6-tetramethyl-4-piperidyl) imino}].

A hindered amine compound sometimes differs in light transmittance even if expressed by the same chemical formula or name. With a polymer, the number average molecular weight sometimes differs. To raise the light transmittance, the purity has to be raised. To raise the number average molecular weight, the catalyst, reaction temperature, or reaction time has to be adjusted.
For example, as shown in detail in the later examples, the commercially available molecular weight 2000 or higher poly[{6-(1,1,3,3-tetramethylbutyl)amino-1,3,5-triazine-2-,4-diyl} {(2,2,6,6-tetramethyl-4-piperidyl)imino}hexameth ylene {(2,2,6,6-tetramethyl-4-piperidyl)imino}] comes in a type with a light transmittance of less than 90% and a type of 95%.

The amount of the hindered amine compound in the resin composition of the present invention is normally 0.01 to 1.5 parts by weight, preferably 0.03 to 1.0 parts by weight, more preferably 0.05 to 0.5 part by weight, with respect to 100 parts by weight of the alicyclic structure-containing polymer. If the amount of the hindered amine compound is not in this range, a sufficient effect cannot be obtained.

### Other Ingredients

The resin composition of the present invention preferably contains another polymer ingredient. As the other polymer ingredient, for example, a main chain hydrogenate of a styrene-butadiene-styrene block copolymer (=styrene-ethylene-butylene-styrene block copolymer [SEBS]), a main chain hydrogenate of a styrene-isoprene-styrene block copolymer (=styrene-ethylene-propylene-styrene block copolymer [SEPS]), etc. may be mentioned. If adding the other polymer ingredient, the article becomes resistant to clouding under a high temperature and high humidity, the bonding with a coating agent etc. becomes higher, and the smoothness becomes higher.

This other polymer ingredient preferably has a metal content of 50 ppm or less, particularly preferably 30 ppm or less.
The content of the other polymer ingredient is normally 0.05 to 70 parts by weight, preferably 0.1 to 50 parts by weight, with respect to 100 parts by weight of the alicyclic structure-containing polymer.

The resin composition of the present invention may contain, for the purpose of improving the mechanical properties, glass fiber, carbon fiber, metal fiber, metal flakes, glass beads, wollastonite, rock filler, calcium carbonate, talc, silica, mica, glass flakes, milled fiber, kaolin, barium sulfate, graphite, molybdenum disulfide, magnesium oxide, zinc oxide whiskers, potassium titanate whiskers, or other fillers alone or in combinations of two or more types.

The resin composition of the present invention may contain, within a range not detracting from the inherent object, any known other antioxidant, flame retardant, antibacterial agent, sawdust, coupling agent, plasticizer, coloring agent, lubricant, silicone oil, foam agent, surfactant, release agent, or other additive.

The resin composition of the present invention, for example, is suitable for forming a pickup lens, video camera lens, telescope lens, fθ lens for laser beam, or other lens, optical video disk, audio disk, document file disk, memory disk, and other optical disk, OHP film or other optical film and other optical material, photo interrupter, photo coupler, LED lamp, or other optical semiconductor sealant, IC card or other IC memory sealant; a liquid crystal display phase difference plate, diffusion plate, light guide panel, light deflection plate protective film, light collection sheet, etc. In particular, it is suitable for forming a pickup lens, fθ lens for laser beam, or other lens; optical video disk, memory disk, or other optical disk; or other shaped article used for a device using a blue laser.

### Method of Production of Resin Composition

The resin composition of the present invention may be produced, for example, by the method of mixing at least an alicyclic structure-containing polymer and hindered amine compound to obtain a pellet-like resin composition; the method of dissolving at least an alicyclic structure-containing polymer and hindered amine compound in a suitable solvent and removing the solvent to obtain a resin composition, etc.

For kneading, for example, single-screw extruder, twin-screw kneader, bambury mixer, kneader, feeder ruder, or other melt kneader may be used. The mixing temperature is preferably 200 to 400°C, more preferably 240 to 350°C. Further, at the time of mixing, it is possible to mix the ingredients all together or mix them while adding them divided into several groups.

### Transparent Shaped Article

The transparent shaped article according to the present invention is comprised of the resin composition of the present invention.
The transparent shaped article may be prepared from the resin composition of the present invention by a known shaping means, for example injection molding, compression molding, extrusion, etc. The shape of the shaped article may be suitably selected in accordance with the application.

The surface of the transparent shaped article of the present invention may be formed with an anti-reflection layer or hard coat layer.
As the anti-reflection layer, one comprised of high refractive index layers and low refractive index layers alternately stacked may be mentioned. The "high refractive index layer" means a layer with a refractive index, measured using light of a wavelength region of 300 to 1600 nm, of 1.8 or more, while a "low refractive index layer" means a layer with a refractive index, measured using light of a wavelength region of 300 to 1600 nm, of 1.7 or less.
As the high refractive index substance forming the high refractive index layer, ITO (indium tin oxide), tantalum oxide, titanium oxide, indium oxide, zirconium oxide, niobium oxide, hafnium oxide, cerium oxide, ATO (antimony tin oxide), tin oxide, zinc oxide, etc. may be mentioned. These may be used alone or in combinations of two or more types.
As the low refractive index substance forming the low refractive index layer, magnesium fluoride, calcium fluoride, silicon oxide, etc. may be mentioned. These may be used alone or in combinations of two or more types.
As the means for forming the anti-reflection layer, vacuum deposition, sputtering, ion plating, or another known method may be mentioned.
As the hard coat agent for forming a hard coat layer, a silane coupling agent or other organic silicone compound, acryl-based resin, vinyl-based resin, melamine resin, epoxy resin, fluorine-based resin, silicon-based resin, etc. may be mentioned.
As the means for forming the hard coat layer, the heat curing method, UV curing method, or other known method may be mentioned.
By forming a hard coat layer on the surface, it is possible to improve the heat resistance, optical properties, chemical resistance, impact resistance, waterproofness, etc. of the shaped article.

The transparent shaped article of the present invention is preferably used for a pickup lens, video camera lens, telescope lens, fθ lens for laser beam, or other lens, optical video disk, audio disk, document file disk, memory disk, or other optical disk, OHP film or other optical film and other optical materials, photo interrupter, photo coupler, LED lamp, or other optical semiconductor sealant, IC card or other IC memory sealant; a liquid crystal display phase difference plate, diffusion plate, light guide panel, light deflection plate protective film, light collection sheet, etc. In particular, it is preferably used for a pickup lens, fθ lens for laser beam, or other lens; optical video disk, memory disk, or other optical disk; or other device using a blue laser.

### Examples

Below, examples of the present invention will be explained, but the present invention is not limited to these. Further, below, "parts" are based on weight.

### Example 1

A nitrogen-substituted stainless steel pressure resistant vessel was charged with styrene in an amount of 76.8 parts and isoprene in an amount of 3.2 parts which were then mixed to prepare a mixed monomer.
Next, a nitrogen-substituted stainless steel autoclave equipped with an electromagnetic stirrer was charged with dehydrated cyclohexane in an amount of 320 parts, a mixed monomer in an amount of 4 parts, and dibutylether in an amount of 0.1 part and was charged with a hexane solution of n-butyl lithium (concentration 15%) in an amount of 0.454 part while stirring at 50°C to start the polymerization. After the elapse of 0.5 hour from the start of polymerization (the polymerization conversion rate at this point of time was about 96%), the mixed monomer was continuously added in an amount of 76 parts over 1 hour. After the elapse of 0.5 hour from the end of addition of the mixed monomer (the polymerization conversion rate at this time was about 95%), isopropyl alcohol was added in an amount of 0.1 part to stop the reaction to thereby obtain a polymerization reaction solution in which a styrene-isoprene random copolymer was dissolved.

Next, 400 parts of the above polymerization reaction solution was mixed with 3 parts of stabilized nickel hydrogenation catalyst E22U (Nikki Chemical, 60% nickel-carrying silica-alumina carrier) to obtain a mixed solution. This was charged into a stainless steel autoclave provided with an electric heater and an electromagnetic stirrer. The autoclave was charged with hydrogen gas, the inside of the autoclave was maintained at 160°C and 4.5 MPa while stirring, and the hydrogenation reaction was conducted for 6 hours. After the end of the hydrogenation reaction, a pressurized filtration device provided with radiolite #800 as a filter bed (Ishikawa-Harima Heavy Industries, funda filter) was used for pressure filtration at a pressure of 0.25 MPa to obtain a colorless transparent solution containing an alicyclic structure-containing polymer.

The obtained colorless transparent solution (polymer solids content 100 parts) was charged with a hindered amine compound of poly[{6-(1,1,3,3-tetramethylbutyl)amino-1,3,5-triazine-2,4-diyl} {(2,2,6,6-tetramethyl-4-piperidyl) imino}hexamethylene {(2,2,6,6-tetramethyl-4-piperidyl) imino}] (400 nm light transmittance by 10 mm light path quartz cell of in 5 wt% chloroform solution: 97.0%, molecular weight: 2000 to 2500) in an amount of 0.1 part and another polymer ingredient of a main chain hydrogenate of a styrene-isoprene-styrene block copolymer (SEPS, styrene/isoprene weight ratio = 30/70, melt flow rate of about 70 g/min (230°C, 2.16 kgf), metal content: 10 ppm) in an amount of 0.2 for dissolution.

This solution was filtered by a metal fiber filter (pore size 0.5 µm, Nichidai). Next, the filtrate was filtered by a Zeta Plus filter 3OS (pore size 0.5 to 1 µm, Cuno) and filtered by a metal fiber filter (pore size 0.2 µm, Nichidai) to remove foreign matter.
The obtained filtrate (polymer concentration = 20%) was heated to 250°C and continuously supplied at a pressure of 3 MPa to a cylindrical concentrating dryer (Hitachi Ltd.) The pressure in the concentrating dryer was adjusted to 60 kPa and the temperature of the polymer solution in the dryer to 260°C for concentration. Next, the concentrated solution was maintained at 260°C and supplied to an identical type concentrating dryer at a pressure 1.5 MPa. The pressure of the second concentrating dryer was adjusted to 1.5 kPa and the temperature of the polymer to 270°C to remove the solvent.

The polymer stripped of the solvent was continuously obtained from concentrating dryer in a molten state, extruded in a class 100 clean room, cooled by water, and cut by a pelletizer (OSP-2, Nagata Seisakusho) to obtain pellets.
The pellets were dissolved in chlorobenzene and analyzed by a gas chromatograph (Hitachi Ltd., G-3000: detection limit 10 ppm), whereupon the content of the volatile ingredients was 150 ppm.

Further, the pellets were dissolved in tetrahydrofuran and measured by gel permeation chromatography. The molecular weight was determined in comparison with the molecular weight of standard polystyrene and the weight average molecular weight (Mw) and number average molecular weight (Mn) were found. The Mw=85,000, and the weight average molecular weight (Mw)/number average molecular weight (Mn) was 1.18.
Further, the hydrogenation rate was about 100% (amount of unhydrogenated aromatic vinyl monomer units with respect to total of unhydrogenated aromatic vinyl monomer units and hydrogenated aromatic vinyl monomer units of 0.01 mol% or less, amount of unhydrogenated conjugated diene monomer units with respect to total of unhydrogenated conjugated diene monomer units and hydrogenated conjugated diene monomer units of 0 mol%), and the glass transition temperature (Tg) was 125°C.

Tetralin filtered and refined by a filter with a pore size of 0.2 µm was used to dissolve these pellets and obtain a 1.5% solution. A light scattering type particle sensor (Rion, KS-58) was used to measure the number of foreign objects of a particle size of 0.5 µm or more in the solution. The number of foreign objects was 2.1 x 10³/g.
The pellets were used in an injection molding machine to form 100 shaped articles of 65 mm x 65 mm x 3 mm size. The 100 shaped articles were examined for appearance. There were zero shaped articles with cracks at the sprue part.

A shaped article was dissolved in tetrahydrofuran and gel permeation chromatography used to find its molecular weight converted to standard polystyrene. The weight average molecular weight was 84, 000, and the weight average molecular weight (Mw)/number average molecular weight (Mn) was 1.22. The Δ(Mw/Mn) was 0.04.
A laser diode (Neoarc, "TC4030S-F405ASU") was used to expose blue laser light of 405±10 nm and 2500 mW/cm² on a shaped article placed in a 60°C room for 72 hours. The shape of the surface of the shaped article after the exposure was examined by an optical microscope (Olympus, X60) and visually checked for ablation (rising of surface of shaped article).

Further, a laser diode (Neoarc, "TC4030S-F405ASU") was used to expose blue laser light of 405±10 nm and 200 mW/cm² on a shaped article placed in a 60°C room for 240 hours. The shaped article after lasering was exposed with strong light from the side surface and the presence of any clouding was examined visually.
The results are shown in Table 1.

### Example 2

A nitrogen-substituted glass reaction vessel was charged with an addition polymer of tetracyclododecene and ethylene (ultimate viscosity [η] 0.54 dl/g, Tg 69°C, molar ratio of tetracyclododecene and ethylene 1:3) in an amount of 100 parts by weight and cyclohexane in an amount of 900 parts by weight and warmed to 50°C. While stirring, aluminum chloride was added in an amount of 20 parts by weight and the mixture reacted as is at a reaction temperature of 50°C. After reaction for 24 hours, the reaction solution was charged into 2000 parts by weight of isopropyl alcohol while stirring, and the precipitated modified product was collected and dried at a reduced pressure of 1 torr or less for 24 hours to obtain a colorless alicyclic structure-containing polymer in an amount of 98 parts by weight.
0.1 part of hindered amine compound of poly [{6-(1,1, 3, 3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}] (400 nm light transmittance by 10 mm light path quartz cell in 5 wt% chloroform solution: 97.0%, molecular weight: 2000 to 2500) with respect to 100 parts of the obtained polymer was charged into a twin-screw kneader and melt kneaded at 230°C to obtain pellets. The pellets were used in an injection molding machine to obtain shaped articles of a size of 65 mm x 65 mm x 3 mm and evaluated in the same way as Example 1. The results are shown in Table 1.

### Example 3

Except for replacing the addition polymer of tetracyclododecene and ethylene in Example 2 with an addition polymer of 1,4-methano-1,4,4a,9a-tetrahydrofluorene and ethylene (Tg of 142°C, molar ratio of 1, 4-methano-1,4, 4a, 9a-tetrahydrofluorene and ethylene of 3:7), the same procedure was followed as in Example 2 to obtain pellets. Next, the same procedure was followed as in Example 2 to obtain a shaped article which was evaluated in the same way as in Example 1. The results are shown in Table 1.

### Comparative Example 1

Except for adding, as the hindered amine compound, poly[{6-(1,1,3,3-tetramethylbutyl)amino-1,3,5-triazine-2,4-diyl} {(2,2,6,6-tetramethyl-4-piperidyl)imino}hexameth ylene {(2,2,6,6-tetramethyl-4-piperidyl)imino}] (400 nm light transmittance by 10 mm light path quartz cell in 5 wt% chloroform solution: 89.0%, molecular weight: about 2500) in an amount of 0.1 part, the same procedure was followed as in Example 2 to obtain pellets and a shaped article which were evaluated in the same way as in Example 1. The results are shown in Table 1.

### Comparative Example 2

Except for adding, as the hindered amine compound, 1-[2-[3-(3,5-di-t-butyl-4-hydroxyphenyl)propionyloxy] ethyl]-4-[3-(3,5-di-t-butyl-hydroxyphenyl)propionyloxy] 2, 2, 6, 6-tetramethyl-piperidine (400 nm light transmittance by 10 mm light path quartz cell in 5 wt% chloroform solution: 98.0%, molecular weight: 722) in an amount of 0.1 part, the same procedure was followed as in Example 2 to obtain pellets and a shaped article which were evaluated in the same way as in Example 1. The results are shown in Table 1.

**Table 1**

| | Ex. 1 | Ex. 2 | Ex. 3 | Comp. Ex. 1 | Comp. Ex. 2 |
|---|---|---|---|---|---|
| Ablation | None | None | None | Yes | Yes |
| Clouding inspection*) | A | A | A | B | C |

| | | | | | |
|---|---|---|---|---|---|
| Note) Cloudiness inspection indicators | | | | | |
| A: No clouding recognized even with examination after irradiation by strong light from side. | | | | | |
| B: Slight clouding recognized under fluorescent light. | | | | | |
| C: Clear clouding recognized under fluorescent light. | | | | | |

As shown in Table 1, when using a hindered amine compound with a molecular weight of a high 2500 or so, but a light transmittance of a low 89.0% (Comparative Example 1), it is learned that ablation occurs and slight clouding occurs. Further, when using a hindered amine compound with a light transmittance of a high 95% but a molecular weight of a low 722 (Comparative Example 2), it is learned that ablation occurs and clouding occurs.

As opposed to this, when using a specific hindered amine compound with a light transmittance of a high 97.0% and a molecular weight of a high 2000 to 2500 (Example 1 to 3), it was confirmed that there was no ablation or clouding of the surface of the shaped article after exposure by a blue laser. From the above, the significance of Examples 1 to 3 can be confirmed.

### INDUSTRIAL APPLICABILITY

By using the resin composition of the present invention, a transparent shaped article is obtained which is free from ablation of the surface of the shaped article when exposed by light of a short wavelength such as that of a blue laser and which can keep a stable transparency. Further, the transparent shaped article can be preferably used for a sealant for sealing of a semiconductor, optical sealing of a semiconductor, etc., optical lens, optical fiber, optical disk, or other optical material, in particular in fields using blue lasers.

## Claims

1. A resin composition containing an alicyclic structure-containing polymer and a hindered amine compound, wherein
said hindered amine compound has (1) a 400 nm light transmittance measured by a 10 mm light path cell in a 5 wt% chloroform solution of 90% or more and (2) a molecular weight of 1500 or more.

2. The resin composition as set forth in claim 1, wherein said hindered amine compound is a polymer.

3. The resin composition as set forth in claim 2, wherein said polymer is poly [{6-(1,1,3,3-tetramethylbutyl) amino-1,3,5-triazine-2,4-diyl} {(2,2,6,6-tetramethyl-4-piperidyl)imino}hexamethylene {(2,2,6,6-tetramethyl-4-piperidyl) imino}].

4. The resin composition as set forth in any one of claims 1 to 3, wherein the content of said hindered amine compound is 0.01 to 1.5 parts by weight with respect to 100 parts by weight of said alicyclic structure-containing polymer.

5. A resin composition as set forth in claim 1, further containing another polymer ingredient with a metal content of 50 ppm or less, the content of said other polymer ingredient being 0.05 to 70 parts by weight with respect to 100 parts by weight of said alicyclic structure-containing polymer.

6. A transparent shaped article comprised of a resin composition as set forth in any one of claims 1 to 5.

7. The transparent shaped article as set forth in claim 6, used for a device using a blue laser.
